# EUROPEAN PATENT APPLICATION

(11) **EP 2 233 520 A1**
(43) Date of publication of application: **29.09.2010**
(21) Application number: 08835316.4
(22) Date of filing: 01.10.2008
(51) Int. Cl.: C08K 5/06, C08K 5/20, C08K 5/36, C08L 23/02

(54) **METHODS FOR REDUCING THE POLAR ADDITIVES NECESSARY FOR USE IN POLYOLEFINS**

(30) Priority: 02.10.2007 WO PCT/ES2007/070165
(71) Applicant: DOW GLOBAL TECHNOLOGIES INC., Midland MI 48674 (US)
(72) Inventor: LLOP, Cosme, E-08028 Barcelona (ES); MANRIQUE, Antonio, E-43007 Tarragona (ES); KARJALA, Teresa P., Lake Jackson Texas 77566 (US); WALTHER, Brian W., Clute Texas 77531 (US); CHEN, Jiaxing, Angleton Texas 77515 (US)
(74) Representative: Hayes, Adrian Chetwynd
(86) International application number: PCT/ES2008/070179
(87) International publication number: WO 2009/043957

(57) **Abstract**

ABSTRACT OF THE DISCLOSURE

A method for improving the efficacy of polar additives used in polyolefins is disclosed. The method is related to the addition of an effective amount of a co-additive compound of the formula R₁(OCH₂CH₂)ₓOH to the polyolefin prior to forming the film, wherein R₁ is a straight or branched chain alkyl of 20 to 100 carbon atoms and x is 2 to 100. The presence of these materials in polyolefin resins allows less polar additives to be used without losing their efficacy and also leads to improved optical properties for films made from such resins.

## Description

### Cross-Reference to Related Applications

This application is a non-provisional application claiming priority from the International Patent Application No. PCT/ES2007/070165, filed on October 2, 2007, entitled "METHOD FOR REDUCTION OF POLAR ADDITIVES REQUIRED FOR USE IN POLYOLEFINS," the teachings of which are incorporated by reference herein, as if reproduced in full hereinbelow.

### Field of Invention

The present invention relates to a method of reducing the amount of polar additives needed for use in polyolefin resin materials. The method includes incorporating into the resin materials having the formula R₁(OCH₂CH₂)ₓOH, wherein R₁ is a straight or branched chain alkyl of 20 to 60 carbon atoms and x is 2 to 100. The co-additive materials used in the present invention are particularly well suited for use with fatty amide additives used as slip agents for polyolefin resins such as very low density linear low polyethylene, substantially linear ethylene polymers, polypropylene, and olefin block copolymers.

### Background and Summary of Invention

Additives are commonly used with polyolefin materials to impart various properties to the resin to make them more suitable for their intended use. Such additives include plasticizers, antioxidants (e.g., hindered phenolics (e.g., Irganox^{™} 1010 made by Ciba Specialty Ch.)), cling additives (e.g., polyisobutylene (PIB)), heat stabilizers (e.g. phosphites (e.g., Irgafos^{™} 168)), pigments, light stabilizers (e.g., Cyasorb™ UV 531 benzophenone made by Cytec Industries and Tinuvin™ 622 hindered amine light stabilizer made by Ciba Specialty Ch.), processing aids (e.g., polyethylene glycols, fluoropolymers, fluoroelastomers, waxes), flame retardants (e.g., Amgard™ CPC 102 phosphorous based flame retardants made by Albright and Wilson Americas), lubricants (e.g., waxes, stearates, mineral oils), slip agents (e.g., erucamide, oleamide), cross-linking agents (e.g., peroxides, (e.g., Booster™ made by DuPont)), antifogging agents (e.g., Atmer™ 100 sorbitan ester made by Uniqema), impact modifiers (e.g., Paxon™ Pax Plus rubber modified film resin made by Allied Corp.), antistatic agents (e.g., Armostat 410 ethoxylated tertiary amine made by Akzo Chemicals, Inc.), and the like.

While these materials may impart beneficial attributes to the resin, they add expense. Thus it would be beneficial to reduce the amount of additives used while generally maintaining the efficacy of the additive.

Furthermore, if the additives can be easily segregated from the resin during processing, they may potentially cause undesirable build-up on equipment, necessitating stoppage for cleaning, and diluting the desired effects of those additives in the final film. Accordingly it would also be desirable to improve the fastness of one or more of the additives to the resin material.

It has been discovered that one or more of these goals can be furthered by adding at least one compound of the formula R₁(OCH₂CH₂)ₓOH to the polyolefin resin, wherein R₁ is a straight or branched chain alkyl of 20 to 60 carbon atoms and x is 2 to 100. Thus one aspect of the present invention is the use of a compound of the formula R₁(OCH₂CH₂)ₓOH as a co-additive for polar additives in a polyolefin resin, wherein R₁ is a straight or branched chain alkyl of 20 to 60 carbon atoms and x is 2 to 100.

The co-additives of the present invention have been observed to have a greater ability to stay attached to the polyolefin resin. It is believed that this phenomenon results in part from the resistance to movement given the relatively high molecular weight of the materials and in part from the increase in Van der Waal forces resulting from the relatively long non-polar tail. It is further believed that the OH groups at the end of these tails can then be used as hydrogen bond links to anchor polar additives such as fatty amides, such as erucamide, which is commonly used as a slip agent in polyolefins. Thus, the effects of polar additives, particularly those which function as a surface modifier such as slip agents, are achieved with less material as the additive is situated at the surface, the ideal position for efficacy. Further, the effects are maintained over a longer period of time as the additive is secured to the resin to a greater degree than other commonly used additives.

It is also important that the co-additives to not detrimentally effect he performance of articles made from resins which include the co-additive. For example it is desirable that sealability of films made from resin incorporating the co-additives not be substantially deteriorated.

### Detailed Description of the Invention

In one aspect, the present invention relates to the use as a co-additive for use with any polar additive, the co-additive being a compound of the formula R₁(OCH₂CH₂)ₓOH, wherein R₁ is a straight or branched chain alkyl of 20 to 100 carbon atoms, preferably from 20 to 60 carbon atoms and x is 2 to 100. In many applications it is preferred that R₁ is a straight chain alkyl with an average value of 30 carbon atoms and x has an average value of about 5. In other applications it may be beneficial to have shorter ethylene oxide chains such that x is from 2 to 25 or even from 2 to 10. Additionally, for other applications it may be preferred that R₁ be a branched chain, or that R₁ have from 20 to 60 carbon atoms. It is preferred that the total average molecular weight for the co-additive be at least 400 g/mole, more preferably at least about 450 g/mole and less than about 2000 g/mole, more preferably less than about 1500 g/mole. It is also preferred that the ethylene oxide content comprises from 20 to 80 percent by weight of the co-additive, more preferably less than or equal to about 50 weight percent. Such compounds are more fully described for their use as hydrophilic agents for improving wettability in WO02/42530, herein incorporated by reference in its entirety. One example of such a compound is commercially available as a masterbatch in a polypropylene carrier from Ciba Specialty Chemicals, Inc. under the trade name Irgasurf™ HL 560. Other examples are commercially available from Baker Petrolite under the trade name of LTNITHOX Ethoxylates.

Without intending to be bound by theory, it is believed that the addition of compounds having the formula R₁(OCH₂CH₂)ₓOH allow the tail OH groups to become fixed to the polymer surface due to the relatively higher molecular weight and compatibility relative to conventional slip additives. These polar OH groups can then be used as a source of hydrogen bond links to provide a chemical anchor of sorts for polar additives such as fatty amides, such as erucamide, which is commonly used as a slip agent in polyolefins. Thus, the effects of polar additives, particularly those which function as a surface modifier such as slip agents, are achieved with less material as the additive is kept in the ideal position for efficacy. Further, the effects are maintained over a longer period of time as the additive is held at the surface such that it is not lost during processing steps.

The co-additive of the present invention will preferably be added to the resin in an amount of from about 200 ppm, alternatively 500 ppm, or 1000ppm to about 3000ppm, alternatively 2500 ppm, or 2000ppm based on the total resin or resin blend. For fibers, as is known in the art, it is typically preferred to use lower amounts of additives within this range (for example from about 200 ppm to about 1000 ppm) to avoid problems in fiber spinning.

These materials can be used with any polyolefin resin or blend containing a polyolefin resin. The preferred polyolefin materials are plastomers and/or elastomers. The preferred polyolefin based plastomers and/or elastomers include polyethylene plastomers and elastomers, polypropylene plastomers and elastomers, olefin block copolymers (also known as statistical multi-block olefin copolymers), linear low density polyethylene, very low density polyethylene, high pressure low density polyethylene, high density polyethylene. Polyethylene based elastomers and plastomers include homogeneously branched linear ethylene polymers such as those in U.S. Patent No. 3,645,992 and substantially linear ethylene polymers such as those described in U.S. Patent 5,272,236, U.S. Patent 5,278,272, U.S. Patent 5,582,923 and US Patent 5,733,155 and/or blends thereof (such as those disclosed in US 3,914,342 or US 5,854,045). Each of these references is hereby incorporated by reference in their entirety. Polyethylene based polymers also include high pressure copolymers of ethylene such as ethylene vinyl acetate interpolymer, ethylene acrylic acid interpolymer, ethylene ethyl acetate interpolymer, ethylene methacrylic acid interpolymer, ethylene methacrylic acid ionomer, and the like. The substantially linear ethylene polymers are preferred. Substantially linear ethylene polymers are commercially available from The Dow Chemical Company under the trade name AFFINITY™.

Propylene based elastomers and plastomers include the propylene based plastomers and elastomers described in WO03/040442, and US application 60/709688 filed August 19, 2005 (each of which is hereby incorporated by reference in its entirety - some of these materials are commercially available from The Dow Chemical Company under the trade name VERSIFY™), and the propylene based plastomers and elastomers sold by ExxonMobil Chemical company under the trade name of VISTAMAXX™.

Segmented ethylene-alpha-olefin block copolymers include those discussed for example in WO 2005/090427, WO 2005/090425 and WO 2005/090426, each of which are hereby incorporated by reference in their entirety. Some of these resins are commercially available from The Dow Chemical Company under the trade name INFUSE™_{.}

Preferred polymers for use in the present invention are those containing a polymeric backbone containing a minimum of 50% carbon atoms, more preferably 65% carbon atoms, and most preferably 75% carbon atoms. The polymers which benefit the most from using the present invention are those with relatively lower surface energy. Surface energy may be measured using any number of conventional techniques and are known to those skilled in the art such as by measuring water contact angle (ASTM D 2578) or direct measurement using Dyne pens (ASTM D 2578), such as the ***ACCUDYNE TEST***™ Marker Pens sold by Diversified Enterprises, Claremont, NH.

In some embodiments it may be beneficial to select a base resin having a density (as determined according to ASTM D-792) of from 0.87 g/cm³, 0.90 g/cm³, 0.91 g/cm³, or 0.92 g/cm³ to about 0.96 g/cm³, 0.95 g/cm³ or 0.94 g/cm³. It may also be beneficial for certain application to select a base resin having a melt index (as determined by ASTM D-1238, Condition 190 C/2.16 kilogram (kg)) of from 0.5 g/10 min, preferably 1.0 g/10 min more preferably 2 g/10 min to about 20 g/10 min, preferably 18 g/10 min, more preferably 15 g/10 min.

The polar additive of the present invention can be any additive commonly used with polyolefin resins. Functional additives include plasticizers, antioxidants (e.g., hindered phenolics (e.g., Irganox^{™} 1010 made by Ciba Specialty Ch.)), heat stabilizers (e.g. phosphites (e.g., Irgafos^{™} 168)), cling additives (e.g., polyisobutylene (PIB)), pigments, light stabilizers (e.g., Cyasorb™ UV 531 benzophenone made by Cytec Industries and Tinuvin™ 622 hindered amine light stabilizer made by Ciba Specialty Ch.), processing aids (e.g., polyethylene glycols, fluoropolymers, fluoroelastomers, waxes), flame retardants (e.g., Amgard™ CPC 102 phosphorous based flame retardants made by Albright and Wilson Americas), lubricants (e.g., waxes, stearates, mineral oils), slip agents (e.g., erucamide, oleamide), cross-linking agents (e.g., peroxides, (e.g., Booster™ made by DuPont)), antifogging agents (e.g., Atmer™ 100 sorbitan ester made by Uniqema), impact modifiers (e.g., Paxon™ Pax Plus rubber modified film resin made by Allied Corp.), antistatic agents (e.g., Armostat 410 ethoxylated tertiary amine made by Akzo Chemicals, Inc.), and the like.

One type of additive commonly added to polyolefins for use in films is slip agents. Slip agents are often polar, and so are well suited for the present invention. Preferably the slip agent is an organic compound (including metal salts thereof) with a waxy or chain hydrocarbon component, and is semi-compatible with the polyolefin. Slip agents may be amides of a fatty mono or di carboxylic acid having from 8-30 carbon atoms, and particularly having from 12-24 carbon atoms which may be saturated or ethylenically unsaturated, with ammonia, or mono or diamines having 2-10 carbon atoms such as primary alkyl amines or alkylene diamines. Examples of such slip agents are oleamide, behenamide, stearamide, erucamide and NN'alkylene diamine bis stearamide, bis oleamide or bis erucamide, oleyl palmitamide, stearyl erucamide, ethylene-bis-stearamide, and ethylene-bis-oleamide. The slip agent may also be a hydrocarbon wax.

As the co-additives of the present invention allow a less polar additive to be used without a commensurate loss of efficacy, the additives can be added in lower amounts than typically observed. For erucamide in films, fibers or fabricated articles, it can be effectively added in a range of from 250 ppm to 2 percent by weight. For many applications it will be preferred that the co-additive be added in an amount of 1500 ppm or less, for example 1000 ppm or less 750 ppm or less, 500 ppm or less or even less than 200ppm.

The additive(s) and co-additive of the present invention may be added in any way known to the art, including via masterbatch and blend mixing. Polypropylene can advantageously be used as a polymer carrier for forming a masterbatch for the co-additive.

Additional non-polar additives may also be added to the polyolefin materials depending on the intended use. Although the co-additives of the present invention themselves have been found to possess some anti-blocking activity, it may be desirable to add additional anti-blocking agents, for example siliceous anti-blocking agents such as silicon dioxide. These may be particularly desirable for use in films. For example, a suitable additive package for use in making polyolefin films can comprise silicon dioxide, erucamide and Irgasurf™ HL 560.

The additive and co-additive containing resins of the present invention, may be used in any application in which polyolefins are currently used. The invention may have particular utility in fibers and in film.

Lower amounts of additives allowed by the use of the co-additive results in the ability to produce films having better optical properties that previously available. Thus films containing at least about 300 ppm antiblock yet characterized by Gloss (as determined at 45° using ASTM D2457-90) greater than about 50 together with total Haze (as determined using ISO 14782, 50 micron film thickness) less than about 14 percent can be obtained.

Films made using the present invention may be made according to the standard processes known in the art. Thus, for example, they may be used with mono or coextruded films which may optionally be subjected to corona treatment.

It has also been discovered that the use of the co-additive by itself (that is, even without the polar additive) imparts properties which may be desirable in certain applications. It has been observed that low density films with about 1.5% Irgasruf™ HL 560 without additional antiblocking agents do not block on either the chill roll or on the film reel right after fabrication. Similarly, elastic fibers such as lastol which incorporate from 1.5 % to about 6% by weight of a co-additive of the present invention have lower unwinding forces that when no additive is used, and in fact lower unwinding forces than when other antiblocking additives are used. Another aspect that has been observed is that when the co-additives described in the present invention are added to cling films, the noise generated in the winding and unwinding of these films is greatly reduced without reducing the cling level, or alternatively the cling level can be increased while keeping the same level.

The following examples are provided to further illustrate the present invention but are not intended to limit the invention to the specific embodiments set forth.

### EXAMPLES

For the following examples an ethylene/1-octene copolymer plastomer having a density of 0.904 g/cm3 and a melt index of 1.0 g/10 min was used as the base resin. Each sample then contained a unique combination of additives as shown in Table 1. For example, Comparative Example 1 contained 750 ppm erucamide, 0 ppm Irgasurf™ and 2500 ppm silica. The silica used in these Examples was a diatomeceous earth flux calcinated type with a particle size distribution of 90% is below 20.2 µm and a less than 10% is below 2.3 µm.

These materials were then formed into films using a conventional laboratory blown film line with a 30 mm diameter single screw extruder. The polymer and the additives were pellet blended off line and added to the feed section of the extruder via an automated feed unit. A mono layer bubble was prepared with a blow up ratio of 2.5:1 and the bubble was cooled with ambient air. The bubble was collapsed and rolled with minimal tension to aid the removal of test samples from the roll. The rolls were stored at room temperature and in a predominately dark environment.

Test film samples were removed from the roll as a function of time, as indicated in the Tables. The integrity of the test samples were optimized by careful lab techniques such as wearing gloves when cutting films from the roll and contacting the test surface as little as possible. The exact geometry of the test pieces was held uniform since all of the specimens were reduced to size from a larger sample using a die cut machine.

Coefficient of friction (COF) was measured in a static mode and in a dynamic mode using an universal machine (Instron 5564) under the ASTM 1894-06 test method. Experiments were conducted on the film moving over an aluminum surface as well as a film to film test. In general, film to film dynamic COF of less than or equal to about 0.3, preferably less than or equal to 0.2 are desirable. The method of the present invention produces particularly improved performance in the reduction of COF at higher temperatures, such as temperatures above 40°C or 50°C.

Table 2 presents COF data generated while the film is in contact with itself when it is moving (that is, the inner side of the film bubble is in contact with the outside side of the bubble). Table 3 presents COF data generated while the outside of the film bubble moves over a metal surface.

**Table 1**

| | erucamide | Irgasurf | silica |
|---|---|---|---|
| Example 1 (Comparative) | 750 | 0 | 2500 |
| Example 2 | 750 | 2500 | 2500 |
| Example 3 | 750 | 5000 | 2500 |
| Example 4 | 750 | 3000 | 2500 |
| Example 5 | 500 | 1000 | 2500 |
| Example 6 | 750 | 3000 | 2500 |
| Example 7 | 500 | 1000 | 2500 |
| Example 8 (Comparative) | 750 | 0 | 2500 |
| Example 9 | 750 | 1000 | 0 |
| Example 10 (Comparative) | 0 | 0 | 0 |

**Table 2 Time (Hours)**

| **Dynamic COF** | **0.5** | **24** | **48** | **168** | **840** |
|---|---|---|---|---|---|
| Example 1 | 0.197 | 0.283 | 0.288 | | 0.189 |
| Example 2 | 0.182 | 0.122 | 0.108 | 0.142 | 0.141 |
| Example 3 | 0.2 | 0.199 | 0.192 | 0.211 | 0.385 |
| | | | | | |
| **Static COF** | **0.5** | **24** | **48** | **168** | **840** |
| Example 1 | 0.439 | 0.314 | 0.316 | 0.989 | 0.27 |
| Example 2 | 0.306 | 0.217 | 0.187 | 0.235 | 0.332 |
| Example3 | 0.373 | 0.329 | 0.264 | 0.337 | 0.313 |

**Table 3 Time (hours)**

| **Dynamic COF** | **0.5** | **24** | **48** | **168** | **840** |
|---|---|---|---|---|---|
| Example 1 | | 0.834 | 0.939 | 0.675 | 0.201 |
| Example 2 | 0.437 | 0.319 | 0.543 | 0.391 | 0.099 |
| Example 3 | 0.481 | 0.208 | 0.806 | 0.752 | 0.103 |
| | | | | | |

| **Static COF** | **0.5** | **24** | **48** | **168** | **840** |
|---|---|---|---|---|---|
| Example 1 | 1.23 | 0.683 | 0.857 | 0.782 | 0.204 |
| Example 2 | 0.269 | 0.227 | 0.388 | 0.43 | 0.046 |
| Example 3 | 0.395 | 0.224 | 0.667 | 0.656 | 0.073 |

The film with Irgasurf at 2500 ppm (Example 2) had the lowest dynamic COF both for film-film and film-metal.

A second set of experiments were performed on monolayer films prepared as above except that a Covex Extruder 45mm-28D was used. Table 4 presents COF data from these films generated while the film is in contact with itself when it is moving (that is, the inner side of the film bubble is in contact with the outside side of the bubble). Table 5 presents COF data generated while the outside of the film bubble moves over a metal surface.

**Table 4**

| | **Time** (hours) | | | | | 7weeks + 2 days |
|---|---|---|---|---|---|---|
| **Dynamic COF** | **0.5** | **24** | **48** | **168** | **792** | **1224** |
| Example 4 | 0.038 | 0.103 | 0.094 | 0.136 | 0.461 | 0.434 |
| Example 5 | 0.025 | 0.082 | 0.061 | 0.078 | 0.203 | 0.176 |
| Example 6 | 0.028 | 0.061 | 0.073 | 0.157 | 0.254 | 0.36 |
| Example 7 | 0.001 | 0.018 | 0.022 | 0.118 | 0.213 | 0.153 |
| Example 8 | 0.087 | 0.02 | 0.085 | 0.023 | 0.05 | 0.049 |
| | | | | | | |

| **Static COF** | **0.5** | **24** | **48** | **168** | **792** | **1224** |
|---|---|---|---|---|---|---|
| Example 4 | 0.082 | 0.154 | 0.108 | 0.171 | 0.361 | 0.308 |
| Example 5 | 0.063 | 0.131 | 0.074 | 0.112 | 0.283 | 0.251 |
| Example 6 | 0.07 | 0.148 | 0.111 | 0.147 | 0.303 | 0.251 |
| Example 7 | 0.029 | 0.05 | 0.056 | 0.156 | 0.314 | 0.249 |
| Example 8 | 0.227 | 0.052 | 0.117 | 0.053 | 0.136 | 0.088 |

**Table 5**

| | **Time**(hours) | | | | | |
|---|---|---|---|---|---|---|
| **Dynamic COF** | **0.5** | **24** | **48** | **168** | **792** | **1224** |
| Example 4 | 0.488 | 0.723 | 0.512 | 0.78 | 0.746 | 0.827 |
| Example 5 | 0.901 | 0.546 | 0.327 | 0.722 | 0.728 | 0.694 |
| Example 6 | 0.532 | 0.407 | 0.17 | 0.403 | 0.349 | 0.556 |
| Example 7 | 0.231 | 0.302 | 0.383 | 0.245 | 0.207 | 0.717 |
| Example 8 | 1.195 | 0.672 | 0.447 | 0.728 | 0.468 | 0.407 |
| | | | | | | |

| **Static COF** | **0.5** | **24** | **48** | **168** | **792** | **1224** |
|---|---|---|---|---|---|---|
| Example 4 | 0.43 | 0.435 | 0.185 | 0.487 | 0.706 | 0.692 |
| Example 5 | 0.631 | 0.383 | 0.126 | 0.609 | 0.734 | 0.561 |
| Example 6 | 0.11 | 0.316 | 0.073 | 0.157 | 0.271 | 0.649 |
| Example 7 | 0.043 | 0.175 | 0.226 | 0.079 | 0.165 | 0.412 |
| Example 8 | 0.882 | 0.538 | 0.687 | 0.539 | 0.411 | 0.275 |

This second set of films were also tested according to the same ASTM 1894-06 test method using a slip / coefficient of friction monitor purchased from Testing Machines, Inc. (TMI). Table 6 presents COF data generated while the film is in contact with itself when it is moving (that is, the inner side of the film bubble is in contact with the outside side of the bubble). Table 7 presents COF data generated while the outside of the film bubble moves over a metal surface

**Table 6**

| Sample # | Run | Static COF | Kinetic COF |
|---|---|---|---|
| Example 9 | COF Too High. Could not test due to films sticking. | | |
| Example 6 | 1 | 0.162 | 0.137 |
| Example 6 | 2 | 0.16 | 0.137 |
| Example 6 | 3 | 0.164 | 0.132 |
| Example 6 | 4 | 0.148 | 0.127 |
| Example 6 | 5 | 0.16 | 0.134 |
| Example 7 | 1 | 0.133 | 0.117 |
| Example 7 | 2 | 0.129 | 0.112 |
| Example 7 | 3 | 0.143 | 0.109 |
| Example 7 | 4 | 0.129 | 0.107 |
| Example 7 | 5 | 0.125 | 0.11 |
| Example 8 | 1 | 0.125 | 0.106 |
| Example 8 | 2 | 0.117 | 0.101 |
| Example 8 | 3 | 0.113 | 0.1 |
| Example 8 | 4 | 0.113 | 0.099 |
| Example 8 | 5 | 0.115 | 0.1 |
| Example 10 | COF Too High. Could not test due to films sticking. | | |

**Table 7**

| Sample # | Run | Static COF | Kinetic COF |
|---|---|---|---|
| Example 9 | 1 | 0.267 | 0.187 |
| Example 9 | 2 | 0.277 | 0.203 |
| Example 9 | 3 | 0.247 | 0.188 |
| Example 9 | 4 | 0.253 | 0.189 |
| Example 9 | 5 | 0.249 | 0.188 |
| Example 9 | 6 | 0.253 | 0.205 |
| Example 6 | 1 | 0.269 | 0.207 |
| Example 6 | 2 | 0.303 | 0.247 |
| Example 6 | 3 | 0.259 | 0.202 |
| Example 6 | 4 | 0.241 | 0.184 |
| Example 6 | 5 | 0.253 | 0.194 |
| Example 6 | 6 | 0.293 | 0.248 |
| Example 7 | 1 | 0.257 | 0.206 |
| Example 7 | 2 | 0.236 | 0.192 |
| Example 7 | 3 | 0.234 | 0.19 |
| Example 7 | 4 | 0.208 | 0.17 |
| Example 7 | 5 | 0.247 | 0.188 |
| Example 7 | 6 | 0.23 | 0.184 |
| Example 8 | 1 | 0.22 | 0.176 |
| Example 8 | 2 | 0.224 | 0.181 |
| Example 8 | 3 | 0.224 | 0.179 |
| Example 8 | 4 | 0.249 | 0.206 |
| Example 8 | 5 | 0.226 | 0.17 |
| Example 8 | 6 | 0.247 | 0.203 |
| Example 10 | 1 | 0.78 | 0.674 |
| Example 10 | 2 | 0.717 | 0.547 |
| Example 10 | 3 | 0.8 | 0.564 |
| Example 10 | 4 | 0.724 | 0.619 |
| Example 10 | 5 | 0.859 | 0.714 |
| Example 10 | 6 | 0.808 | 0.644 |

Again the sample with 1000 ppm of Irgasurf and 500 ppm (Example 7) of erucamide performed equal to the sample with 50percent more erucamide but without Irgasurf (Example 8)

Further testing was done on a series of materials made with higher density LLDPE resins made using Ziegler-Natta catalysts. The base resin for Examples 11 and 13 was an ethylene 1-octene copolymer having a density of 0.919 and a melt index (2.16 Kg 190°C) of 1.05 g/10 min. The base resin for Examples 12 and 14 was a an ethylene 1-octene copolymer having a density of 0.921 with the same melt index (1.05 g/10 min).. The compositions tested are presented in Table 8. The films were produced on the monolayer Covex line (45 mm 25D). COF was again measured on the Instron machine following ISO 8295:1995. Table 9 presents COF data generated while the film is in contact with itself when it is moving (that is, the inner side of the film bubble is in contact with the outside side of the bubble). Table 10 presents COF data generated while the outside of the film bubble moves over a metal surface.

**Table 8**

| | Irgasurf | erucamide | CaCO₃ | Density (g/cm³) | MI (2.16 Kg/190°C) (g/10min) |
|---|---|---|---|---|---|
| Example 11 | | | | 0.919 | 1.05 |
| (Comparative) | **0** | 0 | 0 | | |
| Example 12 | | | | 0.921 | 1.05 |
| (Comparative) | 0 | 750 | 1538 | | |
| Example 13 | 1000 | 350 | 937 | 0.919 | 1.05 |
| Example 14 | 1000 | 750 | 1875 | 0.921 | 1.05 |
| **Table 9** | | | | | |
| | **Time** (hours) | | | | |

| **Dynamic COF** | **0.5** | **24** | **48** | **168** | **792** |
|---|---|---|---|---|---|
| Example 11 | 1.002 | 0.849 | 0.653 | 0.461 | 0.57 |
| Example 12 | 0.141 | 0.056 | 0.055 | 0.064 | 0.031 |
| Example 13 | 0.348 | 0.159 | 0.12 | 0.144 | 0.11 |
| Example 14 | 0.149 | 0.075 | 0.08 | 0.083 | 0.039 |
| **Time** (hours) | | | | | |

| **Static COF** | **0.5** | **24** | **48** | **168** | **792** |
|---|---|---|---|---|---|
| Example 11 | 0.884 | 0.941 | 0.73 | 0.453 | 0.781 |
| Example 12 | 0.149 | 0.091 | 0.097 | 0.098 | 0.098 |
| Example 13 | 0.37 | 0.194 | 0.167 | 0.184 | 0.177 |
| Example 14 | 0.165 | 0.113 | 0.123 | 0.13 | 0.09 |

**Table 10**

| | | | | | |
|---|---|---|---|---|---|
| | **Time** (hours) | | | | |

| **Dynamic COF** | **0.5** | **24** | **48** | **168** | **792** |
|---|---|---|---|---|---|
| Example 11 | | | | | |
| Example 12 | 0.421 | 0.287 | 0.351 | 0.392 | 0.306 |
| Example 13 | 0.396 | 0.283 | 0.301 | 0.445 | 0.656 |
| Example 14 | 0.353 | 0.182 | 0.217 | 0.297 | 0.272 |
| | | | | | |

| **Static COF** | **0.5** | **24** | **48** | **168** | **792** |
|---|---|---|---|---|---|
| Example 11 | | | | 0.733 | |
| Example 12 | 0.417 | 0.352 | 0.379 | 0.364 | 0.313 |
| Example 13 | 0.409 | 0.379 | 0.358 | 0.441 | 0.564 |
| Example 14 | 0.404 | 0.284 | 0.293 | 0.339 | 0.369 |

On this series, the sample with Irgasurf at 1000 ppm and only 350 ppm of erucamide (i.e. Example 13) had a higher COF than the Comparative Example 12, demonstrating the effect that the density of the base resin has on COF.. Note from comparing Examples 13 and 14 that with the Irgasurf, even the film with half the erucamide level still gave COF values below 0.2 for the film-film COF.

A study of the optics of comparative Example 12 and Example 14 was also conducted and presented in Table 11. Gloss was measured at 45° according to using ASTM D2457-90 and total haze was measured according to ISO 14782. The samples were of 50 micron thickness. Example 14 had higher gloss and lower total haze than Example 12 despite similar levels of erucamide and slightly more CaCO₃.

**Table 11**

| | Gloss | Haze |
|---|---|---|
| Comparative Example 12 | 54.68 | 14.4 |
| Example 14 | 59.66 | 11.7 |

Another set of Experiments can be conducted to try and determine the preferred co-additves in terms of molecular weight and percent ethoxylate. Initially a simple test can be set up just to evaluate qualitatively whether the co-additive can be seen at the surface after a wash. A series of films is made as above with the commercially available materials set forth in Table 12. X-ray photoelectron spectroscopy (XPS) is used to determine if the oxygen-containg co-additve could be seen at the surface of the film. The XPS procedure involves first cutting specimens into approximately 1 cm squares. The samples are then subjected to a solvent wash of reagent grade methanol from a wash bottle for about 1 second. Then a wash of reagent grade hexane from a wash bottle for approximately 1 second is conducted. This process is repeated such that there is a total of three rinses for each solvent, with a pause between washes to allow the solvent to drip. Immediately following the rinsing, the specimen surface is blown dry with filtered house nitrogen. The XPS analysis itself is conducted using a Kratos HSi instrument. A monochromatic A1 Kα radiation source is used, which is operated at 210 watts (14 kV, 15 mA). Survey spectra are collected at 80 eV energy resolution and 0.2 eV/step. The remaining O1s peak area is used as the evidence of a co-additive survives the solvent rinsing. The results of this analysis are included in Table 12.

**Table 12**

| | Example 15 | Example 16 | Example 17 | Example 18 | Example 19 |
|---|---|---|---|---|---|
| LAYER A (Thickness) | 100% | 100% | 100% | 100% | 20% |
| Ingredients | | | | | |
| AFFINITY PL-1880 | 99.925 | 99.925 | 99.925 | 99.925 | 99.725 |
| SiO2 (%) | | | | | 0.2 |
| Unithox 420 | 0.075 | | | | |
| Unithox 480 | | 0.075 | | | |
| Unithox 490 | | | 0.075 | | |
| Unithox 750 | | | | 0.075 | |
| Unithox 550 | | | | | 0.075 |
| | | | | | |
| LAYER B (Thickness) | 0 | 0 | 0 | 0 | 80 |
| DOWLEX 2038.68 | 0 | 0 | 0 | 0 | 100 |
| Erucamide (ppm) | 0 | 0 | 0 | 0 | 500 |
| Detection of Surface Oxygen via XPS before solvent wash | Yes | Yes | Yes | Yes | Yes |
| Detection of Surface Oxygen via XPS after solvent wash | No | Yes | No | No | Yes |

As seen in Table 12, optimal performace is observed when the co-additive has a molecular weight in the range of from 400 g/mole to 2000 g/mole, and the ethylene oxide content comprises from 20 to 80 percent by weight of the co-additive.

## Claims

1. A method for improving the efficacy of a polar additive for use with polyolefins comprising adding an effective amount of at least one co-additive compound of the formula R₁(OCH₂CH₂)ₓOH to the polyolefin prior to forming the film, wherein R₁ is a straight or branched chain alkyl of 20 to 100 carbon atoms and x is 2 to 100.

2. The method of claim 1 wherein the polar additive is a slip agent.

3. The method of Claim 2 wherein two or more slip agents are added.

4. The method of claim 2 wherein the slip agent is a fatty amide.

5. The method of claim 4 where the fatty amide is selected from the group considing of erucamide, ethylene-bis-oleamide, ethylene-bis-stearamide.

6. The method of claim 2 where the slip agent is added in an amount of 1000ppm or less.

7. The method of claim 1 wherein the co-additive has a molecular weight in the range of from 400 g/mole to 2000 g/mole.

8. The method of claim 1 wherein the co-additive compound is added in an amount of from 200 ppm to 1500ppm.

9. The method of claim 1 wherein the co-additive is selected from the group consisting of Irgasurf™ HL 560, Unithox™ 480 and Unithox™ 550.

10. The method of claim 1 further comprising adding antiblock agent.

11. The method of claim 10 where the antiblock agent is silica

12. The method of claim 11 where the silica is added in an amount les than about 3000 ppm.

13. The method of claim 1 wherein the ethylene oxide content comprises from 20 to 80 percent by weight of the co-additive.

14. An additive composition comprising a polar slip agent and a compound of the formula R₁(OCH₂CH₂)ₓOH to the polyolefin prior to forming the film, wherein R₁ is a straight or branched chain alkyl of 20 to 60 carbon atoms and x is 2 to 100.

15. A film layer **characterized by** the combination of gloss greater than about 50 together with haze less than about 14 percent and a film to film dynamic coefficient of friction less than 0.3.

16. The film layer of claim 15 wherein the film to film dynamic coefficient of friction is less than 0.2.

17. The film layer of claim 15 wherein the film layer is further **characterized by** the presence of at least one compound of the formula R₁(OCH₂CH₂)ₓOH to the polyolefin prior to forming the film, wherein R₁ is a straight or branched chain alkyl of 20 to 60 carbon atoms and x is 2 to 100, in an amount effective to allow less than 3000ppm of a siliceous anti-blocking agent to be used.
